# EUROPEAN PATENT SPECIFICATION

(11) **EP 0 958 197 B1**
(45) Date of publication and mention of the grant of the patent: **17.04.2002**
(21) Application number: 97945895.7
(22) Date of filing: 01.12.1997
(51) Int. Cl.: B65D 81/34, A21B 3/13

(54) **METHOD FOR MAKING A BAKING PRODUCT**
VERFAHREN ZUR HERSTELLUNG EINES BÄCKEREI-PRODUKTES
PROCEDE DE FABRICATION D'UN PRODUIT DE BOULANGERIE

(30) Priority: 04.12.1996 FI 964850
(43) Date of publication of application: 24.11.1999
(73) Proprietor: Raisio Yhtymä Oyj, 21200 Raisio (FI)
(72) Inventor: PAUKKUNEN, Veli-Matti, FIN-39500 Ikaalinen (FI)
(74) Representative: Haimelin, Jukka Ilmari
(86) International application number: PCT/FI97/00739
(87) International publication number: WO 98/24709

(56) References cited:
- EP-A- 0 240 071
- EP-A- 0 368 601
- WO-A-91/07861
- GB-A- 1 550 000

## Description

The present invention relates primarily to a method of baking a bakery product, and additionally, the scope of the invention relates to the manufacture of a bakery product. In the present context, the term bakery product refers to a foodstuff product whose method of manufacture is chiefly dictated by the properties of the product's grain portion used, as the flour dough, for instance.

Conventionally, bakery products are baked using either so-called open-hearth baking or pan-baking. In open-hearth baking, the bakery product is made from a dough piece having a sufficient coherency for keeping the piece essentially in its intended shape until passed to the baking step. In contrast, pan-baking can be carried out using dough of essentially higher elasticity or otherwise lower coherency, because this baking technique is not so sensitive to the shape retention of the dough. As known, pan-baking can be carried out using either an open pan or a pan covered with a lid.

When baking in an open-hearth oven or open pan, an essential portion of the products surface is in immediate contact with the atmosphere of the oven. This imposes a significant moisture loss effect on the product during baking. Baking in a covered pan in turn makes the pan very. tight, which almost completely prevents evaporation of moisture. Also known in the art are baking methods in which a covered pan is provided with a vent mechanism suitable for controlling the release of evaporated moisture. Such a method is described in, e.g., US Pat. No. 4,590,078.

In order to prevent excessive moisture loss of the product being baked, particularly during baking in an open-hearth oven, the baking process is generally accelerated by increasing the baking temperature. The higher baking temperature obviously also speeds the release of moisture, but nevertheless gives a finished product of higher water content than that achievable using a lower baking temperature and respectively a longer baking time. A cofactor related to this behaviour is the product crumb which forms faster at an elevated temperature, thus causing delayed removal of moisture from the product. A similar phenomenon may also occur during baking in open pans, however, in a lesser degree due to the smaller open surface of the product being baked. An alternative method for delaying the moisture loss of the product during baking is to elevate the moisture content of the baking atmosphere surrounding the product. However, this method affects the crumb formation, thereby causing a less attractive look of the product; and the baking result may also exhibit impaired quality in tasting tests. Crumb formation is even more incomplete in baking processes carried out in covered pans, which makes this baking technique suitable only for certain special applications, wherein the product form is the primary criterium and the products are intended for an end use involving a posttreatment such as roasting.

It is an object of the present invention to provide a baking method for bakery products suitable for improved control of moisture removal from the product during the baking process so that the end product properties are managed in a superior fashion over the prior art. Furthermore, the method permits control of the baking step so that the desired properties of the end product can be attained in a repeatable manner. The repeatability of the baking outcome makes the method suited for industrial applications involving large-volume manufacture of baked products.

It is a further object of the invention to provide a baking method also offering management of such dough varieties which are based on raw materials not inherently rendering the baking properties that are required in conventional open-hearth baking. Dough gluten, which is a vital property affecting the bakeability of dough, is determined by the cereal gluten, particularly its amount and quality. For instance, the use of oat and barley in bakery products is limited due to their inferior gluten properties. This is a significant drawback, because these grain varieties contain a plurality of constituents with good nutritional properties. On the other hand, gluten is the main culprit of the celiac disease.

Controlled management of moisture release during baking is crucial in the baking of, e.g., bread inasmuch bread is commonly known to gain improved taste qualities if the bread can be baked at a lower temperature and using a longer baking time than those permitted by prior-art baking methods, particularly those used in commercial production. Pastry products, such as rolls, in turn are sensitive to excessive moisture loss of the product under baking conditions that otherwise in terms of baking temperature and time are known to give a good baking result.

The desirable goal of a controlled baking technique is attained by virtue of a method according to the invention following the teaching of the features of the enclosed claim 1. Additionally, the scope of the invention covers the manufacture of a bakery product starting from a dough piece so that each dough piece is placed in an individual wrapper having at least a portion its surface area made in a limited manner permeable to moisture, that the dough piece is allowed to rise, when required, in said wrapper and that the dough piece is baked in said wrapper.

By virtue of the baking method according to the invention, benefits are gained already with conventional dough compositions therein that the moisture loss from the bakery product during baking occurs at a slower rate than in open-hearth baking or pan-baking. Resultingly, the baking temperature can be lowered and respectively the baking time extended, thereby rendering the desirable improvement in product taste. Moreover, additional advantages are available in conjunction with products conventionally made using open-hearth baking. In these products, a higher amount of liquid than was possible in the prior art can be used in the dough, because the dough piece will be handled enclosed in the wrapper, whereby such factors as the shape retention of the dough piece becomes irrelevant. The application contemplated herein is, e.g., baking of bread from a dough of particularly low paste viscosity, or alternatively, from a dough made using a low-gluten grain variety.

In the context of the present invention, the term "wrapper material" is used in general reference to a sheet or web of a thin paper- or film-type product offering the desirable properties. The wrapper material shall be of a kind qualified compatible with foodstuff use regulations, it must endure the temperatures applied in the baking processes of bakery products and it must offer a correct rate of moisture permeability for the baking process. Such a moisture permeability can be attained by an inherently porous structure of the wrapper material, or alternatively, the permeability properties may be made puncturing the wrapper material using spark-discharge techniques, for instance.

A suitable wrapper material has been found to be the casing material used in the curing of sausages. This casing is made from fibrous web, in practice, from a paper grade processed to fulfill the given quality criteria. The desirable special properties of the web are obtained by impregnating viscose cellulose into the base web and then regenerating the cellulose. A variety of casing material suitable for use in the application of the invention is manufactured by Visko Oy, Hanko, Finland, under trade marks Visko Standard, Visko EP and Visko X.

The wrapper material used in making a bakery product can be made exclusively from a wrapper product possessing the above-described properties, or alternatively, the invention may be implemented so that each piece of bakery product is prior to its handling enclosed in a wrapper having only a portion of its surface area made permeable to moisture in a manner described above. Then, the other portion of the wrapper can be of essentially similar material, however, being essentially nonpermeable. Such a modification may be advantageous in the manufacture of products with a high fat content, whereby the pan conventionally used to prevent the release of fat from the product may be omitted.

The baking method according to the invention has even wider applications in manufacturing and handling processes of bakery products. As discussed above, the handling properties of the bakery product dough piece can be made independent from its shape retention by enclosing each dough piece after its metering in an individual wrapper. Then, the product can travel also through a possible raising step enclosed in said wrapper into the actual baking step.

Now, the raising and/or baking steps may be substantially outdistanced both temporally and spatially from the reduction of dough into a formed piece. The product can be transported packaged in the wrapper, e.g., in a deep-freezed state to a retail store or directly to the consumer, whereby the raising and/or baking steps required to prepare the finished product can be performed at either site.

On the other hand, if the product is processed closer to its final qualities in an integrated system, essential benefits over the prior art are obtained in the process after the baking step. For instance, baked the product may be delivered in its wrapper, that is, as a ready-packaged product almost immediately after baking to a retail store or directly to the location of the end user. Herein, among other benefits, the cooling steps required in conventional processes prior to packaging may be omitted. Furthermore, the postfermentation of the product in the wrapper continues in an advantageous manner, and still further, the shelf-life, that is, the good-until date of the product may be extended. When desired, the postbaking behaviour of the product may be affected by a separate posttreatment step, wherein the properties of the wrapper are modified into a more advantageous direction in terms of postfermentation and/or storage. For instance, the goal of such a posttreatment may be to reduce the moisture permeability of the wrapper from the value of optimal moisture permeability rate required during baking.

When applied to breadmaking, for instance, the invention may be carried out by metering the dough piece into its protective wrapper using extrusion techniques. While the wrapper itself may have any shape suited for the specific application, a tubular casing is an advantageous form in concurrent manufacturing processes. In order to take into account the expansion of the product during the raising and baking steps, a suitably large volume of space must reserved for the dough piece in the wrapper. As a guideline, about 1/4 of the wrapper overall volume is filled by the dough piece in breadmaking. After the partial filling, the tubular casing can be transferred to the subsequent steps either cut to constant lengths, or alternatively, as a continuous coil of tubular casing if the transport is to be performed over a greater distance.

As mentioned above, the present invention makes it possible to perform baking at a temperature lower than that of conventional baking techniques. Generally, the baking temperature can be lowered by about 5 - 15 °C. Such a lower baking temperature allows about 10 % longer baking time.

## Claims

1. A method of open-hearth baking a bakery product, enclosed in a wrapper material, **characterized in that**, the product is baked from a dough of particularly low paste viscosity or from a dough made using a grain variety of low-gluten or of inferior gluten properties and that the baking is carried out having the bakery product sealed in the wrapper material having at least a portion out its surface area made permeable to moisture in a limited manner.

2. A method according to claim 1, **characterized in, that** about 1/4 of the wrapper overall volume is filled by the dough piece.

3. A method according to claim 1 or 2, **characterized in, that** a baking temperature lowered by about 5 - 15 °C from the temperature, and a baking time about 10% longer than that of the conventional open-heart baking is used.

4. A method as defined in any of the prceding claims 1 to 3, **characterized in that** a wrapper material is used offering limited permeability to moisture over its entire area.

5. A method as defined in claim 4, **characterized in, that** a fibrous web material is used as the wrapper.

6. A method as defined in claim 5, **characterized in that** a wrapper material is used made from a fibrous web treated with an agent affecting the moisture permeability properties of the material.

7. A method as defined in claim 6, **characterized in that** a fibrous web material containing regenerated viscose cellulose is used as the wrapper.

8. A method according to any of the preceding claims, **characterized in, that** the dough piece is allowed to rise in said wrapper before baking.

## Patentansprüche

1. Verfahren zum Backen einer in ein Hüllenmaterial eingeschlossenen Backware auf Ofenherd, **dadurch gekennzeichnet, dass** das Produkt aus einem Teig, der besonders niedrige Viskosität aufweist, oder aus einem Teig, der durch Anwendung einer Getreideart mit niedrigem Glutengehalt oder mit Gluten von schwächerer Qualität hergestellt ist, gebacken wird, und dass das Backen unter Einschluss der Backware in dem Hüllenmaterial durchgeführt wird, wobei mindestens ein Teil der Fläche des Hüllenmaterials beschränkt feuchtigkeitsdurchlässig gebildet ist.

2. Verfahren nach Anspruch 1, **dadurch gekennzeichnet, dass** annähernd ¼ des Gesamtvolumens der Hülle mit einem Teigvorformling gefüllt wird.

3. Verfahren nach Anspruch 1 oder 2, **dadurch gekennzeichnet, dass** eine gegenüber der Temperatur des herkömmlichen Backens auf Ofenherd um ca. 5 bis 15°C reduzierte Temperatur und eine gegenüber der Backzeit des herkömmlichen Backens um ca. 10% verlängerte Backzeit verwendet werden.

4. Verfahren nach einem der vorangegangenen Ansprüche 1 bis 3, **dadurch gekennzeichnet, dass** ein Hüllenmaterial verwendet wird, das über seine ganze Fläche eine beschränkte Feuchtigkeitsdurchlässigkeit aufweist.

5. Verfahren nach Anspruch 4, **dadurch gekennzeichnet, dass** als Hülle ein bahnförmiger Faserstoff verwendet wird.

6. Verfahren nach Anspruch 5, **dadurch gekennzeichnet, dass** ein Hüllenmaterial verwendet wird, das aus einem bahnförmigen Faserstoff hergestellt ist, der mit einem die Eigenschaften der Feuchtigkeitsdurchlässigkeit des Materials beeinflussenden Stoff behandelt worden ist.

7. Verfahren nach Anspruch 6, **dadurch gekennzeichnet, dass** als Hülle ein bahnförmiger Faserstoff verwendet wird, der regenerierte Viskosecellulose enthält.

8. Verfahren nach einem der vorangegangenen Ansprüche, **dadurch gekennzeichnet, dass** man vor dem Backen den Teigvorformling in der Hülle aufgehen lässt.

## Revendications

1. Procédé de cuisson à foyer ouvert d'un produit de boulangerie, enfermé dans une matière d'enveloppe, **caractérisé en ce que** le produit est cuit à partir d'une pâte ayant une viscosité de pâte particulièrement faible ou à partir d'une pâte préparée au moyen d'une variété de grain à faible teneur en gluten ou de propriétés inférieures de gluten, et **en ce que** la cuisson est effectuée avec le produit de boulangerie enfermé dans la matière d'enveloppe dont au moins une partie de la surface est prévue perméable à l'humidité d'une manière limitée.

2. Procédé selon la revendication 1, **caractérisé en ce que** le quart environ du volume total de l'enveloppe est rempli par le morceau de pâte.

3. Procédé selon la revendication 1 ou 2, **caractérisé en ce qu'**on utilise une température de cuisson abaissée de 5 à 15°C environ par rapport à la température de cuisson usuelle à foyer ouvert, et un temps de cuisson de 10% environ plus long que celui de la dite cuisson usuelle.

4. Procédé selon une quelconque des revendications précédentes 1 à 3, **caractérisé en ce qu'**on utilise une matière d'enveloppe présentant une perméabilité limitée à l'humidité sur toute sa surface.

5. Procédé selon la revendication 4, **caractérisé en ce qu'**on utilise, pour l'enveloppe, une matière en feuille fibreuse.

6. Procédé selon la revendication 5, **caractérisé en ce qu'**on utilise une matière d'enveloppe fabriquée à partir d'une feuille fibreuse traitée avec un agent affectant les propriétés de perméabilité à l'humidité de la matière.

7. Procédé selon la revendication 6, **caractérisé en ce qu'**on utilise, pour l'enveloppe, une matière en feuille fibreuse contenant de la cellulose de type viscose régénérée.

8. Procédé selon une quelconque des revendications précédentes, **caractérisé en ce qu'**on laisse le morceau de pâte lever dans la dite enveloppe avant cuisson.
